# EUROPEAN PATENT APPLICATION

(11) **EP 4 368 301 A1**
(43) Date of publication of application: **15.05.2024**
(21) Application number: 23765684.8
(22) Date of filing: 02.02.2023
(51) Int. Cl.: B05C 5/02, B05C 11/06, B05C 9/12

(54) **COATING APPARATUS AND SUBSTRATE PROCESSING EQUIPMENT**

(30) Priority: 09.03.2022 CN 202220518952 U
(71) Applicant: Jiangsu Contemporary Amperex Technology Limited, Liyang City, Jiangsu 213300 (CN)
(72) Inventor: CAO, Haishang, hangzhou, Jiangsu 213300 (CN); BI, Hanrong, hangzhou, Jiangsu 213300 (CN); ZHANG, Qi, hangzhou, Jiangsu 213300 (CN); GENG, Jie, hangzhou, Jiangsu 213300 (CN)
(74) Representative: Ran, Handong
(86) International application number: PCT/CN2023/074236
(87) International publication number: WO 2023/169105

(57) **Abstract**

Provided are a coating apparatus (100) and a substrate processing equipment (500). The coating apparatus (100) comprises: a coating die (101) having first coating ports (1011), wherein the first coating ports (1011) are provided corresponding to a substrate (10) and are used for allowing a slurry to flow out and coating the slurry onto the substrate (10) to form a first coating area (101a); and an air blowing module (102) provided at the downstream of the coating die (101) along a movement direction of the substrate (10), wherein the air blowing module (102) is provided on the side of the substrate (10) coated with the slurry, the air blowing module (102) comprises an air outlet (1021), the air outlet (1021) is provided corresponding to the edge of the first coating area (101a) and is used for blowing air to the edge of the first coating area (101a) in a first direction (Z) to reduce the thickness of the slurry at the edge of the first coating area (101a), the first direction (Z) is parallel to a first surface (P1), and the first surface (P1) is perpendicular to the substrate (10) and is parallel to the movement direction of the substrate (10). The coating apparatus (100) can effectively improve the problems of thick edges and unclear edges of the substrate (10) during a coating process, thereby improving the coating quality of the substrate (10).

## Description

### CROSS-REFERENCE TO RELATED APPLICATIONS

This application claims priority to Chinese patent application No. 202220518952.2, filed on March 9, 2022 and entitled "COATING APPARATUS AND SUBSTRATE PROCESSING EQUIPMENT", which is incorporated herein by reference in its entirety.

### TECHNICAL FIELD

This application relates to the field of substrate processing and more specifically to a coating apparatus and substrate processing equipment.

### BACKGROUND

With the rapid development of electronic products and electric vehicles, higher requirements have been put forward for processing technologies. Taking traction batteries in electric vehicles as an example, a series of treatments are usually required for a substrate during the production and processing of a traction battery. The processing of the substrate typically includes steps such as coating and drying. Coating is the method of applying a viscous slurry onto the substrate to obtain a composite film.

The aforementioned coating process is usually completed by a coating apparatus. If problems such as thick edges and void edges occur during the coating process due to factors such as the surface tension of the slurry, the quality of the dried composite film and subsequent processing of the substrate will be directly affected. Therefore, how the coating quality of the substrate is improved is an urgent problem to be solved.

### SUMMARY

Embodiments of this application provide a coating apparatus and substrate processing equipment, so as to effectively address problems such as thick edges and void edges that occur during the coating process of a substrate, improving the coating quality of the substrate, and helping enhance the processing efficiency of the substrate.

According to a first aspect, a coating apparatus is provided for applying a slurry on a substrate, including: a coating die head, where the coating die head has a first coating port, and the first coating port is disposed corresponding to the substrate and is used for the slurry to flow out and applying the slurry onto the substrate to form a first coating area; and an air blowing module disposed downstream of the coating die head in a movement direction of the substrate, where the air blowing module is disposed on a side of the substrate coated with the slurry, the air blowing module includes an air outlet, the air outlet is disposed corresponding to an edge of the first coating area, the air outlet is used for blowing air along a first direction to the edge of the first coating area to reduce thickness of the slurry at the edge of the first coating area, the first direction is parallel to a first surface, and the first surface is perpendicular to the substrate and parallel to the movement direction of the substrate.

In the embodiments of this application, the coating apparatus has the air blowing module, the air outlet of the air blowing module can be used for continuously blowing air, and the air outlet is disposed corresponding to the edge of the first coating area, so that the slurry at the edge of the first coating area is disturbed by the airflow at the air outlet, thereby reducing the thickness of the slurry at the edge of the first coating area. Reducing the thickness at the edge of the coating area is beneficial to suppress the migration of the slurry towards the edge during the drying process, making the slurry form a more uniform film layer on the substrate after the drying process, effectively addressing problems such as thick edges, void edges, and bulging edges, improving the coating quality of the substrate, and helping to enhance the processing efficiency of the substrate.

In some embodiments, the coating die head further has a second coating port, where the second coating port is disposed in a second direction on at least one side of the first coating port and is used to create a second coating area on the substrate, the second direction is perpendicular to the first surface, a slurry fusion area is present between the first coating area and the second coating area, and the air outlet is disposed corresponding to the slurry fusion area.

In the embodiments of this application, the coating die head can apply different slurries on the substrate through the adjacent first coating port and the second coating port, enriching the coating modes of the coating apparatus, and meeting more coating requirements. In addition, the air outlet of the air blowing module is disposed corresponding to the slurry fusion area, so that the airflow is directed at the slurry fusion area for disturbance, reducing the thickness of the slurry at the slurry fusion area, effectively suppressing the mutual migration of different slurries at the slurry fusion area, thereby alleviating the problem of void edges caused by the migration of different slurries, and improving the coating quality.

In some embodiments, the coating apparatus further includes a positioning module, where the air blowing module is disposed on the positioning module to control a position of the air blowing module, and the positioning module includes: a first positioning module, in driving connection with the air blowing module and configured to drive the air blowing module to move along the first direction, to adjust a distance between the air outlet and the first coating area; and/or a second positioning module, in driving connection with the air blowing module and configured to drive the air blowing module to move along the second direction, to adjust a position of the air outlet in the second direction.

In the embodiments of this application, the air blowing module is disposed on a side of the substrate coated with the slurry through the positioning module, the positioning module can be driven to control a distance between the air outlet and the substrate and the position of the air outlet in the second direction, so that the position of the air outlet can be flexibly adjusted and precisely aligned with the edge of the first coating area, helping to enhance the disturbance effect of the airflow on the slurry at the edge, thereby helping to improve the coating quality of the substrate.

In some embodiments, the first positioning module includes a first positioning rod and a first moving part, where the first positioning rod extends along the first direction, the first moving part is movably disposed on the first positioning rod, and the air blowing module is disposed on the first moving part.

In the embodiments of this application, the first positioning module is constructed by means of a positioning rod and a moving part, so that the air blowing module can be positioned in the first direction with the movement of the moving part on the positioning rod, with a simple structure easy to implement.

In some embodiments, the first positioning module includes a first slide rail and a first slider, where the first slide rail extends along the first direction, the first slider is slidably disposed on the first slide rail, and the air blowing module is disposed on the first slider.

In some embodiments, the second positioning module includes a second slide rail and a second slider, where the second slide rail extends along the second direction, the second slider is slidably disposed on the second slide rail, and the air blowing module is disposed on the second slider.

In the embodiments of this application, the first positioning module and the second positioning module are constructed by means of a slide rail and a slider, with a compact and simple structure, able to reduce the space occupied by the positioning module, thereby improving the space utilization rate of the coating apparatus.

In some embodiments, the coating die head has multiple first coating ports disposed along the second direction to create multiple first coating areas on the substrate; and the coating apparatus includes multiple air blowing modules disposed corresponding to the multiple first coating areas, and multiple air outlets of the multiple air blowing modules are disposed corresponding to edges of the multiple first coating areas.

In the embodiments of this application, the coating die head can have multiple first coating ports, thereby forming multiple first coating areas on the substrate at the same time; multiple air blowing modules are disposed corresponding to multiple first coating areas, simultaneously disturbing the edges of multiple first coating areas with airflow to reduce the thickness of the slurry at the edges, which can improve the coating quality of the substrate while enhancing the coating efficiency.

In some embodiments, the coating die head has multiple first coating ports and multiple second coating ports alternately disposed along the second direction to create multiple slurry fusion areas on the substrate; and the coating apparatus includes multiple air blowing modules corresponding to the multiple slurry fusion areas, and multiple air outlets of the multiple air blowing modules are disposed corresponding to the multiple slurry fusion areas.

In the embodiments of this application, the coating die head further has multiple second coating ports, which can form multiple first coating areas on the substrate while also forming multiple second coating areas alternately arranged with the first coating areas; multiple air blowing modules are disposed corresponding to multiple slurry fusion areas, simultaneously disturbing multiple slurry fusion areas with airflow to reduce the thickness of the slurry at the slurry fusion areas, which can improve the coating quality, diversity of coating, and coating efficiency of the substrate at the same time.

In some embodiments, the air blowing module includes an airflow adjustment unit and an airflow transmission unit, where the airflow adjustment unit is used to control velocity of an airflow at the air outlet, and the airflow transmission unit is used to transmit the airflow to the air outlet.

In the embodiments of this application, the air blowing module transmits airflow to the air outlet through the airflow transmission unit, and adjusts the velocity of the airflow at the air outlet through the airflow adjustment unit, so that the transmission and output of the airflow can be controlled and adjusted according to coating needs, improving flexibility of the air blowing module, thereby enhancing the flexibility of the coating apparatus.

In some embodiments, the airflow adjustment unit includes: an air pressure adjusting component, configured to adjust air pressure of the airflow to control the velocity of the airflow; and/or a flow control component, configured to adjust flow of the airflow to control the velocity of the airflow.

In the embodiments of this application, the airflow adjustment unit uses an air pressure adjusting component to adjust the air pressure, and a flow control component to adjust the airflow, to control the velocity of the airflow at the air outlet by adjusting the air pressure and/or the flow of the airflow, with a simple structure easy to implement, and capable of flexibly and precisely controlling the velocity of the airflow at the air outlet, helping to improve the adjustment performance of the air blowing module.

In some embodiments, the coating apparatus further includes an image acquisition module disposed downstream of the air blowing module in the movement direction of the substrate and in communication connection with the air blowing module, where the image acquisition module is configured to acquire image information of the substrate, and the air blowing module adjusts velocity of an airflow at the air outlet according to the image information.

In the embodiments of this application, the coating apparatus further has the image acquisition module, which can take pictures of the substrate after coating. The image acquisition module is in communication connection with the air blowing module, so that the air blowing module can obtain image information of the substrate after coating by the coating apparatus, thereby flexibly adjusting the velocity of the airflow at the air outlet according to the coating effect, helping to improve the coating quality of the substrate and confirm the coating effect.

According to a second aspect, substrate processing equipment is provided, including: the coating apparatus according to the first aspect and any possible embodiment of the first aspect, configured to apply a slurry on the substrate; and a drying apparatus, disposed downstream of the coating apparatus in a movement direction of the substrate to dry the substrate.

In summary, this application provides a coating apparatus with a simple structure that can effectively address problems such as thick edges, void edges, and bulging edges during the coating process, improving the coating quality; this application further provides substrate processing equipment, including the aforementioned coating apparatus and a drying apparatus. A uniform slurry layer can be formed on the substrate coated by the aforementioned coating apparatus and dried by the drying apparatus, avoiding problems such as thick edges, void edges, and bulging edges, improving the quality of the film formed after coating and drying, and facilitating subsequent winding or further processing.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a coating apparatus according to an embodiment of this application;
FIG. 2 is a schematic diagram of the principle of airflow disturbance of a coating apparatus according to an embodiment of this application;
FIG. 3 is a schematic structural diagram of a positioning module according to an embodiment of this application;
FIG. 4 is another schematic structural diagram of a coating apparatus according to an embodiment of this application; and
FIG. 5 is a schematic structural diagram of substrate processing equipment according to an embodiment of this application.

### DESCRIPTION OF EMBODIMENTS

The following further describes embodiments of this application in detail with reference to the accompanying drawings and examples. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly vertical, but within the allowable range of error. "Parallel" is not strictly parallel, but within the allowable range of error.

The orientation terms appearing in the following description all are directions shown in the figures, and do not limit the specific structure of the application. In the descriptions of this application, it should be further noted that unless otherwise specified and defined explicitly, the terms "mounting", "connection", and "join" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The coating process is a processing means of coating a substrate with a viscous slurry to form a uniform slurry layer on the substrate, commonly found in the fields of chemical engineering, electrical engineering, aerospace, and so on, and is an indispensable technology in modem processing technology. In the actual coating process, due to the influence of factors such as the surface tension of the slurry and the flatness of the substrate, the slurry is prone to migrate to the edges of the coating area before being applied on the substrate and dried by the drying apparatus, resulting in uneven thickness of the dried slurry layer, with an increased thickness at the edge area, producing bulging edges, or thick edges; or when the coating apparatus simultaneously applies multiple types of slurries, different slurries migrate to each other, making the boundaries of the dried different slurries unclear, causing void edges. The above problems will cause inconsistent quality of the products obtained after the substrate is coated and dried, making the slurry prone to cracking during the winding process, or causing inaccurate positioning during the die-cutting process. This causes material waste and is not conducive to further processing.

In view of this, this application provides a coating apparatus and substrate processing equipment that can effectively improve the coating quality of the coating apparatus and solve the problems of bulging edges, thick edges, or void edges caused by coating.

It should be understood that the embodiments of this application are exemplified by the processing of current collectors, and the coating apparatus and substrate processing equipment provided by the embodiments of this application can be used for, but are not limited to, processing current collectors. They can also be used for more exquisite graphic processing tasks such as display panels, integrated circuits, and semiconductors, similarly improving the coating quality of the substrate.

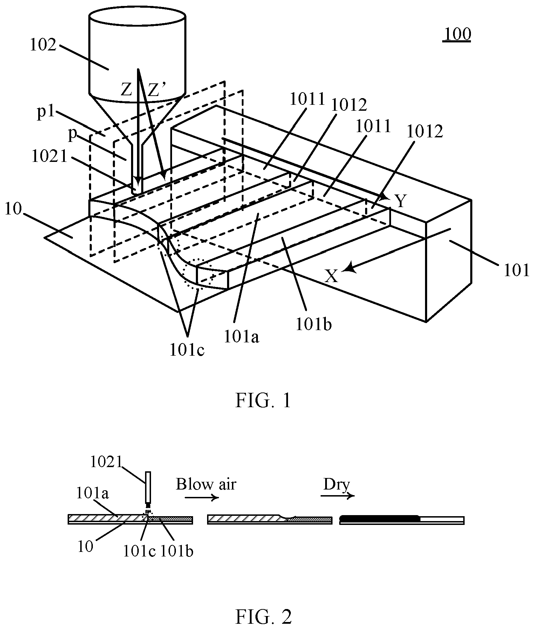

FIG. 1 is a schematic structural diagram of a coating apparatus 100 according to this application.

The coating apparatus 100 is configured to apply a slurry on a substrate 10, and the coating apparatus 100 includes a coating die head 101 and an air blowing module 102.

The coating die head 101 has a first coating port 1011, and the first coating port 1011 is disposed corresponding to the substrate 10, for the slurry to flow out, and applying the slurry onto the substrate 10 to form a first coating area 101a.

The air blowing module 102 is disposed downstream of the coating die head 101 in a movement direction of the substrate 10 on a side of the substrate 10 coated with the slurry, the air blowing module 102 includes an air outlet 1021 disposed corresponding to the edge of the first coating area 101a, the air outlet is used for blowing air along the first direction Z towards the edge of the first coating area 101a to reduce thickness of the slurry at the edge of the first coating area 101a, the first direction Z is parallel to the first surface p1, and the first surface p1 is perpendicular to the substrate 10 and parallel to the movement direction of the substrate 10.

Specifically, the substrate 10 moves along a fixed direction, and the direction X shown in FIG. 1 is the movement direction of the substrate 10. As the substrate 10 moves, the slurry flows out from the coating die head 101 through the coating port to form the corresponding coating area. For example, the slurry flows out from the first coating port 1011 to form the first coating area 101a on the substrate 10, and the slurry continuously flowing out from the two edges of the first coating port 1011 forms the edge lines of the first coating area 101a as the substrate 10 moves forward. Along the movement direction X of the substrate 10, downstream of the coating die head 101, there is an air blowing module 102, whose air outlet 1021 is aligned with the edge of the first coating area 101a, and blows air along the first direction Z towards that edge, causing the airflow to disturb the slurry at the edge of the first coating area 101a, which can reduce the thickness of the slurry at the edge.

The first direction Z is parallel to the first surface p1, as shown in the Z direction in FIG. 1. The first surface p1 is a plane perpendicular to the substrate 10 and parallel to the movement direction of the substrate 10, in other words, the first surface p1 is a plane perpendicular to the substrate 10 along the edge line of the coating area. The first direction Z is parallel to the first surface p1, meaning that the line in which the first direction Z lies is on a plane p parallel to the first surface p1, and therefore the direction of the air outlet 1021 can be perpendicular to the substrate 10, or it can have a certain angle with the substrate 10 (as shown in the direction Z' in FIG. 1). That is, the blowing direction on the plane p can be perpendicular to the movement direction X of the substrate, or slightly inclined to form a certain angle with the movement direction X of the substrate. FIG. 1 only shows two indicative directions, but the first direction Z is not limited to this.

The first direction Z is on the plane p, in other words, the air outlet 1021 can tilt forward and backward along the movement direction X of the substrate 10. Since the tilt is along the movement direction X of the substrate 10, the air outlet 1021 can always be aligned with the edge of the coating area to blow air, thereby reducing the thickness at the edge of the coating area. The air outlet 1021 cannot tilt in the direction perpendicular to the first surface p1, that is, the Y direction in FIG. 1, because once it tilts left and right along the Y direction, the air outlet 1021 will blow air at a position deviating from the edge of the coating area, which will instead accelerate the migration of the slurry at the edge area. Additionally, the substrate 10 is usually transported along a path of a roller shaft during actual processing, so the movement direction X of the substrate 10 cannot always remain horizontal. The ability of the air outlet 1021 to tilt along the movement direction X of the substrate 10 increases the fault tolerance and flexibility of the air blowing module 102.

Optionally, the first direction Z is perpendicular to the substrate 10.

Specifically, when the first direction Z is perpendicular to the substrate 10, the air outlet 1021 blows air along a thickness direction of the substrate 10. Since the air outlet 1021 blows air perpendicularly towards the edge of the coating area of the substrate 10, the slurry at that edge area is disturbed by the airflow with an even force, making the reduction in thickness at the edge area more consistent. Therefore, when the first direction Z is perpendicular to the substrate 10, the air blowing module 102 has the best effect on the airflow disturbance at the edge of the coating area.

The type of gas blown out by the air blowing module 102 includes but is not limited to air, argon, helium, and steam. The substrate 10 mentioned in this application can be a current collector such as copper, aluminum foil, and composite metal, or other materials. Taking a current collector as an example, the slurry formed by the electrode active material is applied on the surface of the current collector, and the film formed after drying is a battery electrode plate. Electrode active materials are divided into positive electrode active materials and negative electrode active materials. The positive electrode active materials can be lithium cobaltate, lithium iron phosphate, ternary lithium, or lithium manganate, and the negative electrode active materials can be carbon, silicon, or the like.

Optionally, the air blowing module 102 is used to blow air to control the thickness of the edge of the first coating area 101a within a circular range with a radius of 1 mm to 10 mm centered on the air outlet 1021.

In this embodiment, disposing an air blowing module 102 in the coating apparatus 100 and using the air blowing module 102 to disturb the edge of the coating area with airflow reduce the thickness of the slurry at the edge of the coating area, thereby suppressing the migration of the slurry towards the edge of the coating area, making the slurry form a uniform slurry layer on the surface of the substrate 10 after the drying step, effectively improving problems such as thick edges and bulging edges, improving the coating quality, and facilitating subsequent winding and further processing.

Optionally, in some embodiments, as shown in FIG. 1, the coating die head 101 also has a second coating port 1012, where the second coating port 1012 is disposed along the second direction Y on at least one side of the first coating port 1011 to create a second coating area 101b on the substrate 10. The second direction Y is perpendicular to the first surface p1. There is a slurry fusion area 101c between the first coating area 101a and the second coating area 101b. The air outlet 1021 is disposed corresponding to the slurry fusion area 101c.

Specifically, the second direction Y is perpendicular to both the first surface p1 and the plane p, in other words, the second direction Y is in the transverse direction of the substrate 10. That is, the second coating port 1012 can be disposed on at least one side of the first coating port 1011 along the transverse direction of the substrate 10. Correspondingly, the slurry flows out from the second coating port 1012 to form the second coating area 101b on the substrate 10. The junction between the first coating area 101a and the second coating area 101b forms the slurry fusion area 101c. When the coating die head 101 has different coating ports, the air outlet 1021 is aligned with the slurry fusion area 101c between the coating areas, disturbing it with airflow to reduce the thickness of the slurry at the slurry fusion area 101c.

It should be understood that the different coating ports of the coating die head 101 are used for different slurries to flow out, so that a slurry fusion area 101c can be formed between different coating areas. The size of the first coating port 1011 and the second coating port 1012 in FIG. 1 is only indicative and does not constitute a limitation on the specific size relationship of the coating ports.

Next, refer to FIG. 2 for further introduction to the principle of airflow disturbance at the slurry fusion area 101c. FIG. 2 shows a cross-section of the substrate 10 with the slurry coated. Taking the processing of the positive electrode plate of a battery cell as an example, it is necessary to coat the substrate 10, that is, the current collector, with positive electrode materials and insulating slurries. The positive electrode materials are positive electrode active materials, used for electrochemical reactions, and the insulating slurries are used to prevent short circuits during assembly of a battery cell, and can help reduce burrs when cutting the film during mass production of electrode plates, facilitating determination of the film width. In this case, the first coating port 1011 is used for the positive electrode materials to flow out and form the first coating area 101a on the substrate 10, and the second coating port 1012 is used for the insulating slurries to flow out and form the second coating area 101b on the substrate 10. The first coating area 101a and the second coating area 101b are adjacent, thus forming the slurry fusion area 101c between the first coating area 101a and the second coating area 101b. It should be understood that the first coating port 1011 can also be used for the insulating slurries to flow out, and the second coating port 1012 can also be used for the positive electrode materials to flow out.

When there is no airflow disturbing the slurry fusion area 101c, the different surface tensions as well as the ionic Brownian motion and other factors of the positive electrode materials and the insulating slurries will cause them to migrate to each other, making the boundary between them blurred, causing void edges after the drying process. Since the insulating layer formed by the insulating slurry after drying can help determine the width of the positive electrode materials during the cutting process of the positive electrode plate, prevent the generation of burrs, and help prevent short circuits during the assembly process of the battery cell, once void edges occur during the coating process, it will directly affect the quality and production efficiency of the positive electrode plate.

As shown in FIG. 2, the coating apparatus 100 of this application has an air blowing module 102, whose air outlet 1021 can be aligned with the slurry fusion area 101c to blow air for airflow disturbance, reducing the thickness of the slurry at the slurry fusion area 101c, thereby suppressing the mutual migration of different slurries, effectively addressing the problem of void edges and improving the coating quality of the substrate 10.

In this embodiment, first, the coating module 102 has different coating ports, which can apply different slurries on the substrate 10, increasing the coating modes of the coating apparatus 100, thereby meeting more diverse coating needs and expanding the application scenarios of the coating apparatus 100. Second, the air outlet 1021 of the air blowing module 102 is aligned with the slurry fusion area 101c to blow air, reducing the thickness of the slurry at the slurry fusion area 101c, thereby effectively addressing the problem of void edges caused by slurry migration and improving the coating quality of the coating apparatus 100 when coating different slurries on the substrate 10.

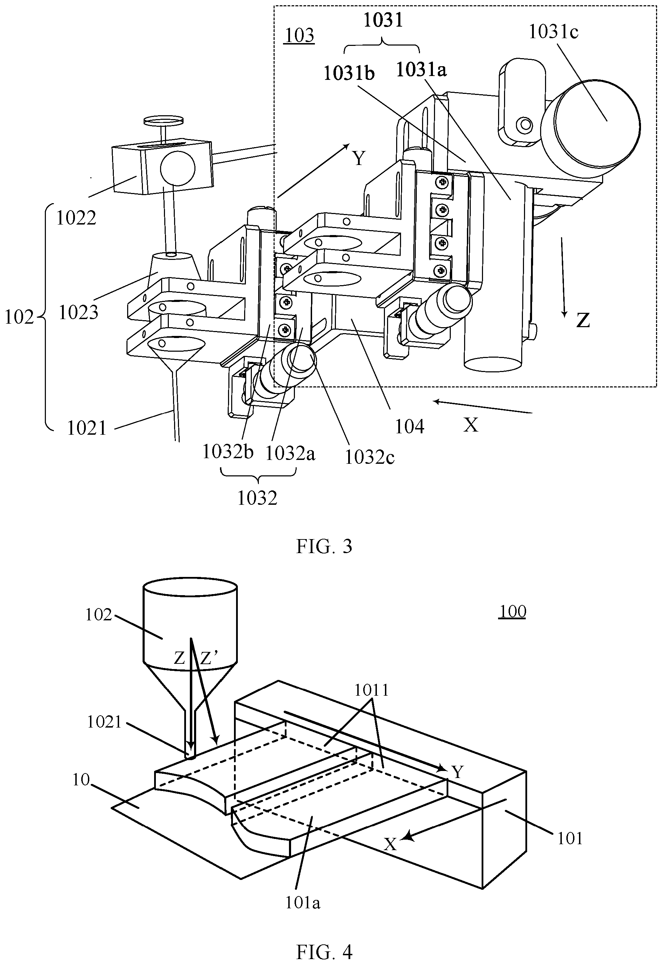

FIG. 3 is a schematic structural diagram of a positioning module 103 according to an embodiment of this application.

Optionally, the coating apparatus 100 further includes a positioning module 103. The air blowing module 102 is disposed on the positioning module 103 to control the position of the air blowing module 102.

The positioning module 103 includes a first positioning module 1031 and/or a second positioning module 1032. The first positioning module 1031 is in driving connection with the air blowing module 102 and configured to drive the air blowing module 102 to move along the first direction Z, to adjust the distance between the air outlet 1021 and the first coating area 101a. The second positioning module 1032 is in driving connection with the air blowing module 102 and configured to drive the air blowing module 102 to move along the second direction Y, to adjust a position of the air outlet 1021 in the second direction Y

Specifically, the air blowing module 102 can be disposed on a side of the substrate 10 coated with the slurry through the positioning module 103. The positioning module 103 can control the air blowing module 102 to move in a certain direction. The coating apparatus 100 can have only the first positioning module 1031, in which case the position of the air outlet 1021 in the second direction Y is fixed, and the positioning module 103 can flexibly adjust the distance between the air outlet 1021 and the first coating area 101a, thereby controlling the range of airflow disturbance of the air blowing module 102 on the edge of the substrate 10. For example, the closer the air outlet 1021 is to the substrate 10, the larger the range of airflow disturbance of the air blowing module 102 on the substrate 10. The coating apparatus 100 can also have only the second positioning module 1032, in which case the distance between the air outlet 1021 and the first coating area 101a is fixed, and the positioning module 103 can flexibly adjust the position of the air outlet 1021 in the second direction Y, that is, the position of the air outlet 1021 in the transverse direction of the substrate 10, thereby accurately positioning the edge of the coating area or the slurry fusion area 101c for substrates 10 of different widths, to meet the coating needs of substrates 10 of different widths; the coating apparatus 100 can also have both the first positioning module 1031 and the second positioning module 1032, simultaneously adjusting the distance between the air outlet 1021 and the first coating area 101a as well as the position of the air outlet 1021 in the second direction Y

Optionally, the adjustment range of the first positioning module 1031 for adjusting the position of the air outlet 1021 in the first direction Z is ≥ 2 mm, and the adjustment precision is ≤ 0.5 mm.

Optionally, the adjustment range of the second positioning module 1032 for adjusting the position of the air outlet 1021 in the second direction Y is ≥ 2 mm, and the adjustment precision is ≤ 1 mm.

In this embodiment, the air blowing module 102 is disposed above the coating area through the positioning module 103. The positioning module 103 can adjust the position of the air outlet 1021 in different directions, so that the air outlet 1021 can be aligned with the edge of the first coating area 101a or the slurry fusion area 101c to blow air, ensuring the accuracy of airflow disturbance, helping to enhance the flexibility of the air blowing module 102 and the effect of airflow disturbance, thereby improving the coating quality of the substrate 10.

Optionally, as shown in FIG. 3, the first positioning module 1031 includes: a first positioning rod 1031a and a first moving part 1031b. The first positioning rod 1031a extends along the first direction Z, the first moving part 1031b is movably disposed on the first positioning rod 1031a, and the air blowing module 102 is disposed on the first moving part 1031b.

Specifically, since the first positioning rod 1031a is disposed along the first direction Z, the first moving part 1031b moves on the first positioning rod 1031a, that is, the first moving part 1031b moves along the first direction Z, and the air blowing module 102 disposed on the first moving part 1031b moves along with it in the first direction Z. Additionally, the movement of the first moving part 1031b on the first positioning rod 1031a can be controlled by the first knob 1031c. For example, by turning the first knob 1031c clockwise, the first moving part 1031b moves on the first positioning rod 1031a towards the direction closer to the substrate 10; by turning the first knob 1031c counterclockwise, the first moving part 1031b moves on the first positioning rod 1031a away from the direction of the substrate 10.

Optionally, the first positioning module 1031 includes a first slide rail and a first slider. The first slide rail extends along the first direction Z, the first slider is slidably disposed on the first slide rail, and the air blowing module 102 is disposed on the first slider.

Optionally, as shown in FIG. 3, the second positioning module 1032 includes: a second slide rail 1032a and a second slider 1032b. The second slide rail 1032a extends along the second direction Y, the second slider 1032b is slidably disposed on the second slide rail 1032a, and the air blowing module 102 is disposed on the second slider 1032b.

Specifically, both the first positioning module 1031 and the second positioning module 1032 can adopt the method of slide rail and slider. The first positioning module 1031 and the second positioning module 1032 can be connected by a connector 104. Additionally, the movement of the second slider 1032b on the second slide rail 1032a can be controlled by the second knob 1032c. For example, by turning the second knob 1032c clockwise, the second slider 1032b slides along the second direction Y towards the side closer to the left edge of the substrate 10; by turning the second knob 1032c counterclockwise, the second slider 1032b slides along the second direction Y towards the side closer to the right edge of the substrate 10.

In this embodiment, the first positioning module 1031 and the second positioning module 1032 are disposed by means of sliders and slide rails, which not only are easy to implement but also have a compact structure, saving the space occupied by the positioning module 103, and helping to improve the space utilization rate of the coating apparatus 100.

Optionally, as shown in FIG. 4, the coating die head 101 has multiple first coating ports 1011 disposed along the second direction Y to create multiple first coating areas 101a on the substrate 10.

The coating apparatus 100 includes multiple air blowing modules 102 disposed corresponding to multiple first coating areas 101a. Multiple air outlets 1021 of multiple air blowing modules 102 are disposed corresponding to the edges of multiple first coating areas 101a.

Specifically, when the coating die head 101 has multiple first coating ports 1011 disposed transversely along the substrate 10, multiple air blowing modules 102 corresponding to the edges of multiple first coating areas 101a can be disposed. For example, the coating die head 101 has N first coating ports, forming N first coating areas 101a on the substrate 10, and one corresponding air blowing module 102 can be disposed at the edge of the first coating area 101a, that is, N air blowing modules 102, so that at least one edge of the first coating area 101a is disturbed by airflow, thereby reducing the slurry thickness. For another example, the coating die head 101 has N first coating ports, each first coating area 101a has two parallel edges, and one corresponding air blowing module 102 can be disposed at each edge of the first coating area 101a, that is, 2N air blowing modules 102, so that each edge of the first coating area 101a is disturbed by airflow, thereby reducing the slurry thickness.

In this embodiment, on the one hand, multiple first coating ports 1011 allow the coating apparatus 100 to coat more substrates 10 simultaneously, forming multiple first coating areas 101a, improving the coating efficiency of the coating apparatus 100; on the other hand, multiple air blowing modules 102 disposed corresponding to the first coating areas 101a can simultaneously disturb the edges of multiple first coating areas 101a with airflow to reduce the slurry thickness at the edges, resolving the thick edge and bulging edge problems of multiple coating areas, and improving the coating quality of the substrate 10.

Optionally, continue to refer to FIG. 1. The coating die head 101 has multiple first coating ports 1011 and multiple second coating ports 1012 alternately disposed along the second direction Y to create multiple slurry fusion areas 101c on the substrate 10.

The coating apparatus 100 includes multiple air blowing modules 102 corresponding to the multiple slurry fusion areas 101c, and multiple air outlets 1021 of the multiple air blowing modules 102 are disposed corresponding to multiple slurry fusion areas 101c.

Specifically, when the coating die head 101 has multiple first coating ports 1011 and second coating ports 1012 disposed transversely along the substrate 10 in an alternating arrangement, because the first coating port 1011 and the second coating port 1012 are used for different slurries to flow out, multiple alternating first coating areas 101a and second coating areas 101b on the substrate 10 form multiple slurry fusion areas 101c, and multiple air blowing modules 102 corresponding to the slurry fusion areas 101c can be disposed. For example, if the coating die head 101 has N first coating ports 1011 and N second coating ports 1012 alternately disposed along the second direction Yto create 2N-1 slurry fusion areas 101c on the substrate 10, a corresponding air blowing module 102 can be disposed above each slurry fusion area 101c, that is, 2N-1 air blowing modules, so that each slurry fusion area 101c is disturbed by airflow, thereby reducing the slurry thickness.

In this embodiment, the coating die head 101 has multiple first coating ports 1011 and second coating ports 1012 arranged alternately, which can coat a large area of different materials on the substrate 10 simultaneously, improving the performance of the coating apparatus 100; and the coating apparatus 100 also has multiple air blowing modules 102 corresponding to multiple slurry fusion areas 101c, which can simultaneously reduce the thickness of multiple slurry fusion areas 101c, improving the coating quality of the substrate 10.

Optionally, in some embodiments, as shown in FIG. 3, the air blowing module 102 includes an airflow adjustment unit 1022 and an airflow transmission unit 1023. The airflow adjustment unit 1022 is used to control the velocity of the airflow at the air outlet 1021, and the airflow transmission unit 1023 is used to transmit the airflow to the air outlet 1021.

In this embodiment, the air blowing module 102 transmits airflow to the air outlet 1021 through the airflow transmission unit 1023, and adjusts the velocity of the airflow at the air outlet 1021 through the airflow adjustment unit 1022, so that the transmission and output of the airflow can be controlled and adjusted according to the coating needs, improving the flexibility of the air blowing module 102, thereby enhancing the flexibility of the coating apparatus 100.

Optionally, the airflow adjustment unit 1022 includes an air pressure adjusting component and/or a flow control component. The air pressure adjusting component is used to adjust the air pressure of the airflow to control the velocity of the airflow; while the flow control component is used to adjust the flow of the airflow to control the velocity of the airflow.

The air pressure adjusting component can be a pressure valve, an air pump, a pressure-limiting valve, or a combination thereof; and the flow control component can be a flow control valve, a flow pump, a flow-limiting valve, or a combination thereof.

Optionally, the adjustment range of the air pressure adjusting component for adjusting air pressure is ≥ 0.1 MPa, and the adjustment precision is ≤ 0.05 MPa.

In this embodiment, the airflow adjustment unit 1022 uses an air pressure adjusting component to adjust the air pressure, and a flow control component to adjust the airflow, with a simple structure easy to implement, capable of flexibly and precisely controlling the velocity of the airflow at the air outlet 1021, helping to improve the adjustment performance of the air blowing module 102.

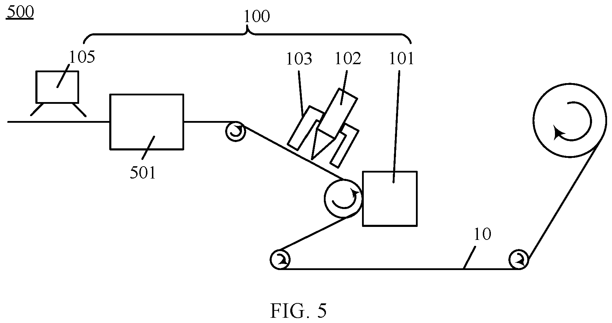

Referring to FIG. 5, FIG. 5 is a schematic structural diagram of substrate processing equipment 500 according to this application. From FIG. 5, it can be seen that the substrate 10 is unwound in a direction of rotation of the roller shaft, moving forward along the direction of unwinding and the path in which the roller shaft is arranged, arriving at the coating apparatus where the substrate 10 is coated with slurry by the coating die head 101. After being blown by the air blowing module 102, the substrate 10 enters the drying apparatus 501. After the slurry on the substrate 10 is completely dried, the processed substrate 10, that is, the film, is obtained.

Optionally, the coating apparatus 100 also includes an image acquisition module 105 disposed downstream of the air blowing module 102 in the movement direction of the substrate 10 and in communication connection with the air blowing module 102. The image acquisition module 105 is used to acquire image information of the substrate 10. The air blowing module 102 then adjusts the velocity of the airflow at the air outlet 1021 according to the image information.

Specifically, the image acquisition module 105 can collect images of the film obtained after the substrate is coated by the coating apparatus 100 and dried by the drying apparatus 501, that is, the image information of the substrate 10. By collecting the image information of the substrate 10, the current coating effect of the coating apparatus 100 can be judged in time, thereby adjusting the coating parameters of the coating apparatus 100 in time, such as: the flow speed of the slurry at the coating port, the position of the air outlet 1021 of the air blowing module 102, and the velocity of the airflow at the air outlet 1021, to achieve the best coating effect. The image acquisition module 105 is in communication connection with the air blowing module 102, so that the air blowing module 102 can automatically obtain the current image information, which can be compared with the preset image information to automatically adjust the velocity of the airflow at the air outlet 1021.

In this embodiment, the image acquisition module 105 can take pictures of the film to help users judge the coating effect of the coating apparatus 100 in time; the image acquisition module 105 is in communication connection with the air blowing module 102, so that the air blowing module 102 can automatically obtain the image information of the substrate 10, thereby automatically adjusting the velocity of the airflow at the air outlet 1021 according to the coating effect, helping to improve the coating quality of the substrate 10 and improve the coating efficiency.

Still refer to FIG. 5. An embodiment of this application further provides substrate processing equipment 500 including a coating apparatus 100 and a drying apparatus 501.

The coating apparatus 100 is configured to apply a slurry on the substrate 10; the drying apparatus 501 is disposed downstream of the coating apparatus 100 in a movement direction of the substrate 10 to dry the substrate 10.

In summary, the embodiment of this application provides a coating apparatus 100 that can effectively resolve problems such as thick edges, bulging edges, and void edges, by disturbing the edges of the coating area with airflow from the air blowing module 102 to improve the coating quality of the substrate 10; the embodiment of this application also provides substrate processing equipment 500, which can apply a slurry on the substrate 10 and dry the slurry to obtain a uniform film, improving the processing efficiency and quality of the substrate 10, and facilitating further processing.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A coating apparatus for applying a slurry on a substrate, **characterized by**:
a coating die head, wherein:
the coating die head has a first coating port; and
the first coating port is disposed corresponding to the substrate and is used for the slurry to flow out and applying the slurry onto the substrate to form a first coating area; and
an air blowing module disposed downstream of the coating die head in a movement direction of the substrate, wherein:
the air blowing module is disposed on a side of the substrate coated with the slurry; and
the air blowing module comprises an air outlet, wherein:
the air outlet is disposed corresponding to an edge of the first coating area; and
the air outlet is used for blowing air along a first direction to the edge of the first coating area to reduce thickness of the slurry at the edge of the first coating area, wherein the first direction is parallel to a first surface, and the first surface is perpendicular to the substrate and parallel to the movement direction of the substrate.

2. The coating apparatus according to claim 1, wherein the coating die head further has a second coating port, wherein:
the second coating port is disposed in a second direction on at least one side of the first coating port and is used to create a second coating area on the substrate, wherein the second direction is perpendicular to the first surface;
a slurry fusion area is present between the first coating area and the second coating area; and
the air outlet is disposed corresponding to the slurry fusion area.

3. The coating apparatus according to claim 2, further comprising a positioning module, wherein the air blowing module is disposed on the positioning module to control a position of the air blowing module, and the positioning module comprises:
a first positioning module, in driving connection with the air blowing module and configured to drive the air blowing module to move along the first direction, to adjust a distance between the air outlet and the first coating area; and/or
a second positioning module, in driving connection with the air blowing module and configured to drive the air blowing module to move along the second direction, to adjust a position of the air outlet in the second direction.

4. The coating apparatus according to claim 3, wherein the first positioning module comprises a first positioning rod and a first moving part, wherein:
the first positioning rod extends along the first direction;
the first moving part is movably disposed on the first positioning rod; and
the air blowing module is disposed on the first moving part.

5. The coating apparatus according to claim 3, wherein the first positioning module comprises a first slide rail and a first slider, wherein:
the first slide rail extends along the first direction;
the first slider is slidably disposed on the first slide rail; and
the air blowing module is disposed on the first slider.

6. The coating apparatus according to claim 3, wherein the second positioning module comprises a second slide rail and a second slider, wherein:
the second slide rail extends along the second direction;
the second slider is slidably disposed on the second slide rail; and
the air blowing module is disposed on the second slider.

7. The coating apparatus according to any one of claims 2 to 6, wherein:
the coating die head has multiple first coating ports disposed along the second direction to create multiple first coating areas on the substrate; and
the coating apparatus comprises multiple air blowing modules disposed corresponding to the multiple first coating areas, and multiple air outlets of the multiple air blowing modules are disposed corresponding to edges of the multiple first coating areas.

8. The coating apparatus according to any one of claims 2 to 6, wherein:
the coating die head has multiple first coating ports and multiple second coating ports alternately disposed along the second direction to create multiple slurry fusion areas on the substrate; and
the coating apparatus comprises multiple air blowing modules corresponding to the multiple slurry fusion areas, and multiple air outlets of the multiple air blowing modules are disposed corresponding to the multiple slurry fusion areas.

9. The coating apparatus according to any one of claims 1 to 6, wherein the air blowing module comprises an airflow adjustment unit and an airflow transmission unit, wherein:
the airflow adjustment unit is used to control velocity of an airflow at the air outlet; and
the airflow transmission unit is used to transmit the airflow to the air outlet.

10. The coating apparatus according to claim 9, wherein the airflow adjustment unit comprises:
an air pressure adjusting component, configured to adjust air pressure of the airflow to control the velocity of the airflow; and/or
a flow control component, configured to adjust flow of the airflow to control the velocity of the airflow.

11. The coating apparatus according to any one of claims 1 to 6, further comprising:
an image acquisition module disposed downstream of the air blowing module in the movement direction of the substrate and in communication connection with the air blowing module, wherein the image acquisition module is configured to acquire image information of the substrate, and the air blowing module adjusts velocity of an airflow at the air outlet according to the image information.

12. A substrate processing equipment, comprising:
at least one coating apparatus according to any one of claims 1 to 11, configured to apply a slurry on the substrate; and
a drying apparatus, disposed downstream of the coating apparatus in a movement direction of the substrate to dry the substrate.
